# EUROPEAN PATENT SPECIFICATION

(11) **EP 1 719 692 B1**
(45) Date of publication and mention of the grant of the patent: **03.06.2009**
(21) Application number: 05709820.4
(22) Date of filing: 07.02.2005
(51) Int. Cl.: B62D 21/00

(54) **REINFORCEMENT DEVICE FOR BODY OF VEHICLE**
VERSTÄRKUNGSVORRICHTUNG FÜR FAHRZEUGAUFBAU
DISPOSITIF DE RENFORCEMENT POUR CARROSSERIE DE VÉHICULE

(30) Priority: 13.02.2004 JP 2004036266
(43) Date of publication of application: 08.11.2006
(73) Proprietor: Yamaha Hatsudoki Kabushiki Kaisha, Iwata-shi, Shizuoka 438-8501 (JP)
(72) Inventor: SATOU, Masahiro, c/o YAMAHA HATSUDOKI KABUSHIKI K., Iwata-shi, Shizuoka 4388501 (JP); KONDOU, Katsuhiro, c/o YAMAHA HATSUDOKI K. K., Iwata-shi, Shizuoka 4388501 (JP)
(74) Representative: Grünecker, Kinkeldey, Stockmair & Schwanhäusser Anwaltssozietät
(86) International application number: PCT/JP2005/001768
(87) International publication number: WO 2005/077738

(56) References cited:
- EP-A- 0 955 228
- WO-A-20/05066011
- DE-A1- 10 247 492
- JP-A- 4 238 781
- JP-A- 6 099 846
- JP-A- 2002 211 437

## Description

### [Field of the Invention]

The present invention relates to a body reinforcement device for a vehicle for reinforcing a body when mounted to the body such that two portions to be reinforced are connected to each other. Such a device is generally known.

### [Background Art]

Conventionally, a body of a motorcar has been formed such that a highest possible strength is effected while aiming at weight saving. In such a kind of body, to a region where a greater strength is required compared with other regions, such as a section where a wheel suspension device is mounted, is mounted a reinforcement member in such a manner that two portions to be reinforced are connected to each other. As for such a reinforcement member, there has been known one formed in the shape of a rod by a rigid body or one in which damping force generating means is provided, for example, as shown in JP-A-2002-211437.

The reinforcement member disclosed in this patent publication is formed in an elongated shape, and damping force generating means is provided in its middle in the longitudinal direction, such as a hydraulic damper or a rubber. This reinforcement member spans the space between two portions to be reinforced of a body, that is, between a suspension mounting portion on the left side of the body and a suspension mounting portion on the right side thereof.

### [Disclosure of the Invention]

### [Problem to be Solved by the Invention]

The body of an automobile is some times subjected to elastic deformation in a direction in which the distance between two portions to be reinforced is shortened, or in a direction opposite to that, when an abrupt handling operation, for example, is performed during running. At this time, a load is also applied, in the direction of compression or the direction of elongation, to the reinforcement member connecting the portions to be reinforced to each other. If a reinforcement member formed only by a rigid body is used, the reinforcement member is subj ected to elastic deformation in the direction of compression or the direction of elongation by a load applied to the body when it is deformed, as described above.

This reinforcement member stretches or contracts by its own elasticity when it is released from the load and the force causing the elastic deformation vanishes. The conventional reinforcement member made from a rigid body comes to vibrate in the longitudinal direction during abrupt handling operation because of its longitudinal elongation and contraction. Therefore, while the vehicle body using this reinforcement member made from a rigid body is less likely to be elastically deformed, it may provide unnecessary vibration in the reinforcement member.

Such a disadvantage can be eliminated to some extent by using a reinforcement member having damping force generating means such as disclosed in JP-A-2002-211437. This is because vibration of the reinforcement member itself is damped by the damping force generating means.
However, since the reinforcement member provided with damping force generating means is decreased in its repulsion force when a load is applied in the direction of compression or the direction of elongation, the capacity to suppress the deformation of the body was low compared with when a reinforcement member made from a rigid body is used.

In view of the foregoing, the object of this invention is to provide a body reinforcement device for a vehicle which is capable of reliably suppressing deformation of a body and which doesn't constitute a vibration generating source.

### [Means for Solving the Problem]

In order to achieve the foregoing object, the body reinforcement device for a vehicle according to this invention is provided with a reinforcement member for rigidly connecting two portions to be reinforced of a vehicle body with each other, and damping force generating means for generating viscous damping force spanning, along the reinforcement member, the space between the portions to be reinforced.

### [Effect of the Invention]

As described above, according to the invention of claim 1 to claim 3, a reinforcement member substantially functions as a beam and reinforces the vehicle body, when a load is applied, in the direction of compression or the direction of elongation, to the reinforcement member at each end. At this time, the reinforcement member is elastically deformed in the direction of compression or the direction of elongation by the load applied to the reinforcement member at each end, stretches or contracts by its own elasticity when released from the load, so that it comes to vibrate in the longitudinal direction. However, since in the reinforcement device according to this invention, damping force generating means is provided across the space between two portions to be reinforced where the reinforcement member is mounted, the displacement of the reinforcement member in the longitudinal direction is kept small by the damping force generating means, whereby the vibration is damped.
Therefore, according to this invention, a body reinforcement device can be provided in which the deformation of a body can be suppressed reliably and no vibration is produced.

According to the invention of claim 4, one ends of the reinforcement member and the damping force generating means attached to a mounting bracket are rigidly connected to each other through the mounting bracket. Therefore, vibration of the reinforcement member can be transmitted directly from one end thereof to one end of the damping force generating means through the mounting bracket, and vibration can be dampened more reliably by the damping force generating means. In addition, since the mounting bracket is mounted to the portion to be reinforced, one ends of the reinforcement member and the damping force generating means can be mounted at a time to the portion to be reinforced. Therefore, this body reinforcement device can be mounted to the body easily compared with when the reinforcement member and the damping force generating means are mounted separately to the body.

According to the invention of claim 5, it is possible that one of the reinforcement member and the damping force generating means, only one member provided, is located on the same axial line as an imaginary line connecting the two portions to be reinforced of the body, and a plurality of members provided are located at positions symmetrical with respect to the imaginary line.
Therefore, in the body reinforcement device according to this invention, no moment due to reaction force is produced when a load is applied from the portion to be reinforced of the body and the body can be reinforced more firmly when the reaction force is exerted in the longitudinal direction (along the imaginary line).

### [Brief Description of the Drawings]

FIG. 1 is a plan view showing a body reinforcement device for a vehicle according to this invention.
FIG. 2 is a perspective view showing the reinforcement device according to the invention being mounted to a vehicle body.
FIG. 3A is a side view showing another embodiment.
FIG. 3B is a plan view showing the other embodiment.
FIG. 4 is a perspective view showing the reinforcement device being mounted to a body.
FIG. 5A is a side view showing another embodiment.
FIG. 5B is a plan view showing the other embodiment.

### [Best Mode for Carrying out the Invention]

### (First Embodiment)

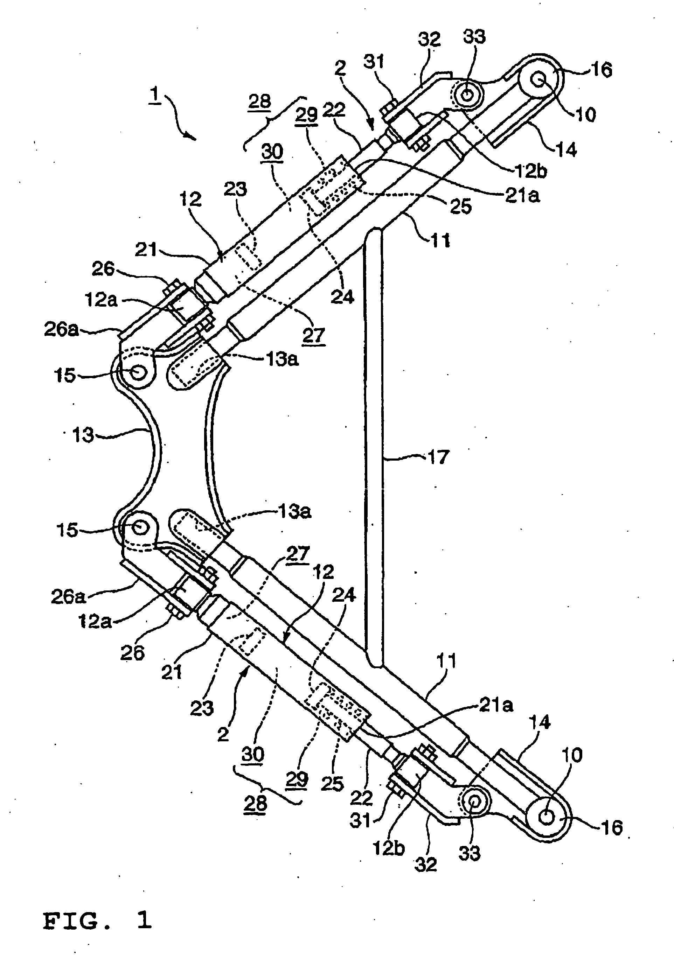

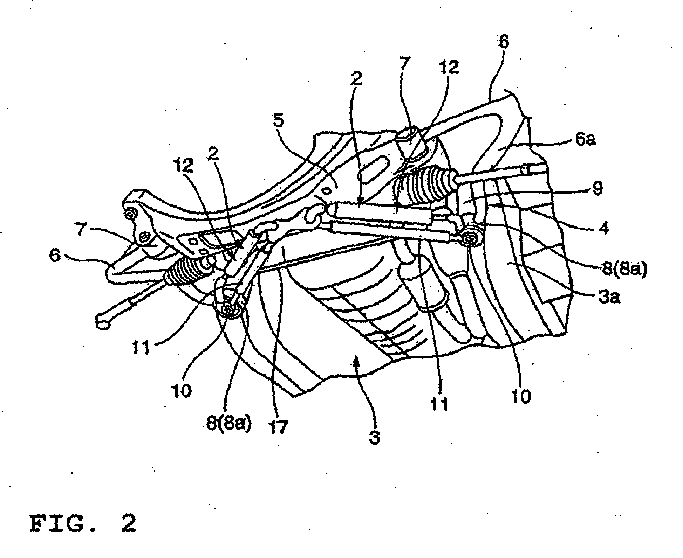

Now, one embodiment of the body reinforcement device for a vehicle according to this invention will be described in detail with reference to FIG. 1 and FIG. 2.
FIG. 1 is a plan view showing the body reinforcement device for a vehicle according to this invention, and FIG. 2 is a perspective view showing the reinforcement device according to this invention being mounted to a vehicle body.
In these figures, a reference numeral 1 denotes a reinforcement device assembly formed by using two body reinforcement devices according to this embodiment. The reinforcement device assembly 1, as shown in FIG. 2, is a device for reinforcing the portion in a chassis 3 of an automobile where a front wheel suspension device 4 is mounted.

The front wheel suspension device 4, as is conventionally well-known, is constituted with a front suspension member 5 forming part of the chassis 3; a pair of left and right lower arms 6, 6 extending laterally of the vehicle body from both ends of the front suspension member 5 in the lateral direction; a pair of left and right upper arms (not shown) connected to the ends of these lower arms 6, 6 through a knuckle (not shown); a cushion unit (not shown) provided between the swinging portion of one of both these arms and a body 3a of the chassis 3; and the like.

The front suspension member 5 supports part of an unillustrated engine and a forward pivot portion 7 of the lower arm 6, and is rubber-mounted or rigid-mounted to the body 3a of the chassis 3.
The lower arm 6, as shown in FIG. 2, is supported by the forward pivot portion 7 and a rear pivot portion 8 (described later) for up and down swinging movement to the chassis 3. The rear pivot portion 8 is provided with an unillustrated inner cylinder, an outer cylinder housing the inner cylinder inside and having an arm body 6a of the lower arm 6 welded thereto and a cushion rubber (not shown) provided between these cylinders, and is mounted to a mounting seat 9 provided on the body 3a of the chassis 3 in a projecting relation, with a mounting bolt 10.

Mounting to the mounting seat 9 of the rear pivot portion 8 is performed by placing the rear pivot portion 8 on the mounting seat 9 with its axis pointing vertically and fastening the inner cylinder to the mounting seat 9 with the mounting bolt 10 inserted in the inner cylinder. That is, with the rear pivot portion 8 mounted on the mounting seat 9, the cushion rubber is elastically deformed and the outer pipe 8a is displaced with respect to the inner pipe, so that the arm body 6a makes swinging movements.

The reinforcement device assembly 1 is formed by two body reinforcement devices 2, 2 being combined in the shape of a letter V in plan view so that the chassis 3 can be reinforced by the connection of the laterally central portion of the front suspension member 6 and the left and right mounting seats 9.
The body reinforcement device 2, as shown in FIG. 1, is constituted with a rod 11 formed by one metallic round bar, a hydraulic damper 12 disposed along the rod 11 side by side to be parallel to the rod 11, a first mounting bracket 13 connecting one ends of both these members to each other (left side ends in FIG. 1) and a second mounting bracket 14 connecting the other ends of both members to each other. In this embodiment, the rod 11 constitutes the reinforcement member referred to in this invention, and the hydraulic damper 12 constitutes the damping force generating means referred to in this invention.

The first mounting bracket 13 according to this embodiment is formed large-sized compared with the second mounting bracket 14, to which one ends of the two reinforcement devices are attached, and is fixed to the portion to be reinforced of the body with two fixing bolts 15, 15. The portion to be reinforced of the vehicle body to which this first mounting bracket 13 is mounted, refers to the laterally central portion of the front suspension member 6.

The rod 11 of each of the foregoing two reinforcement devices 2 is made from a hollow round bar formed such that its central portion is thicker than each end, and to the other end of the rod 11 are welded a coupling boss 16 and a second mounting bracket 14.
Connection of one end of the rod 11 to the mounting bracket 13 is performed thorough inserting one end of the rod 11 into the mounting hole 13a formed in the first mounting bracket 13 and welding the end to the opening of the mounting hole 13a. The mounting hole 13a is formed inclined such that its axis is located gradually outwardly of the body toward the rear of the body (rightward in FIG. 1) in order that the two rods 11 are attached to the first mounting bracket 13 in the shape of a letter V in plan view.

The other end of the rod 11 according to this embodiment is fixed to the portion to be reinforced of the body together with the second mounting bracket 14 with the mounting bolt 10. The portion to be reinforced refers to the mounting seat 9 to which the rear pivot portion 8 of the lower arm 2 is mounted, as shown in FIG. 2. That is, the mounting bolt 10 fastens the rear pivot portion and second mounting bracket 14 together.
The rod 11 according to this embodiment, as shown in FIG. 2, is connected to the rod 11 of the other reinforcement device 2 through a cross member 17.

The hydraulic damper 12 is constituted with a cylinder 21, a piston rod 22 mounted detachably to the cylinder 21, a free piston 23 fitted for movement in the cylinder 21 on the opposite side from the piston rod 22, a piston 24 with a choke fixed to the piston rod 22 at its end, a compression coil spring 25 for biasing the piston with a choke in the opposite direction from the piston rod 22, and the like.

The cylinder 21 is provided, at its end on the opposite side from the piston rod 22, with a boss 12a, and is fixed to a mounting metal 26a through the boss 12a and a fixing bolt 26. The mounting metal 26a is fixed to the first mounting bracket 13 with a fixing bolt 15 for fixing the first mounting bracket 13 to the front suspension member 5. The mounting metal 26a may be welded to the first mounting bracket 13.

The interior of the cylinder 21 is divided by the free piston 23 into a high pressure gas chamber 27 and an oil chamber 28. The oil chamber 28 is divided by the piston 24 with a choke into a first oil chamber 29 located on the piston rod 22 side and a second oil chamber 30 located on the free piston 23 side. The high pressure gas chamber 27 is filled with N₂ gas at a high pressure and the first and second oil chambers 28, 29 are filled with working oil.

The piston rod 22 is provided, at its end on the opposite side from the cylinder 21, with a boss 12b, and a mounting metal 32 is fixed through the boss 12b and the fixing bolt 31. The mounting metal 32 is fixed to the second mounting bracket 14 with a fixing bolt 33. The mounting metal 32 may be welded to the second mounting bracket 14.

The piston 24 with a choke mounted to the piston rod 22 is provided with a choke (not shown) for the communication between the first oil chamber 29 and the second oil chamber 30. That is, the hydraulic damper 12 is configured such that the damping force (viscous damping force) is produced when working oil flows through the choke from the first oil chamber 29 into the second oil chamber or from the second oil chamber 30 into the first oil chamber 29.

The compression coil spring 25 is provided between the piston 24 with a choke and a piston rod-side cover 21a of the cylinder 21. The spring force of the compression coil spring 25 is set to a value as large as that counterbalancing the gas pressure in the high pressure gas chamber 27. That is, the free piston 23 pushes working oil in the second oil chamber 30 through gas pressure in the high pressure gas chamber 27. However, the piston 24 with a choke is maintained in a neutral position without changing its position when biased by the spring force of the compression spring 25.

In addition, the compression coil spring 25 is formed by a shape-memory alloy or a bimetal approximately in whole. In forming the compression coil spring 25 from such a material, it is arranged such that when the temperature of the compression coil spring 25 is raised (or lowered), its free length in the axial direction of the cylinder 21 is extended (or shortened) according to the characteristics to thereby increase (or decrease) the foregoing biasing force.

As a result of adopting such an arrangement, in the hydraulic damper 12, even if the temperature of the hydraulic damper 12 is raised by the engine heat and the gas pressure in the high pressure gas chamber 27 is increased, the piston 24 with a choke can be retained in a neutral position. This is because in the hydraulic damper 12, the spring force of the compression coil spring 25 for biasing the piston 24 with a choke is also increased by the temperature rise. Therefore, no load is applied to the two portions to be reinforced of the body from the reinforcement device 2 as a result of the temperature change. The free piston 23 moves in the axial direction by the distance corresponding to the amount of volumetric change of the piston rod 22 in the cylinder 21.

The hydraulic damper 12 formed as described above, is attached to the first mounting bracket 13 and second mounting bracket 14 such that its axis is parallel to the axis of the rod 11. In forming the reinforcement device assembly 1 by combining two reinforcement devices 2 in the shape of a letter V in a plan view as in this embodiment, the hydraulic damper 12 is positioned adjacent to and at the outer side of the rod 11 in the lateral direction of the vehicle body in relation to the connection of both the rods 11, 11 and the cross member 17.

The body reinforcement device 2 arranged as described above, is mounted to a vehicle body, with the first mounting bracket 13 fixed to the laterally central portion of the suspension member 14 and with the second mounting bracket 14 fixed to the rear pivot portion 8 of the lower arm 7. As a result of the reinforcement device 2 mounted to the vehicle body in this way, the two portions to be reinforced (suspension member 14 and rear pivot portion 8) of the body are connected to each other rigidly by the rod 11.

Therefore, in the body reinforcement device 2, when the body (chassis 3) is elastically deformed due to abrupt handling operation, for example, and a load is applied at each end in the direction of compression or the direction of elongation, the rod 11 substantially functions as a beam to thereby reinforce the body. As a result, provision of the reinforcement device 2 enables the deformation of the body to be kept small.
When the body reinforcement device 2 suppresses the elastic deformation of the body, the rod 11 is elastically deformed in the direction of compression or the direction of elongation, with a load applied at each end, and stretches or contracts by its own elasticity. Therefore, the rod 11 comes to vibrate in the longitudinal direction at this time.

However, since in this reinforcement device 2, the hydraulic damper 12 is connected to the rod 11 through the first mounting bracket 13 and second mounting bracket 14 and damping force is produced by the hydraulic damper 12 if the rod 11 vibrates in the longitudinal direction, the vibration of the rod 11 is dampened by the hydraulic damper 12. That is, in the chassis 3 reinforced by the body reinforcement device 2, no vibrate is produced because of the rod 11 constituting a vibration generating source.
Therefore, the body reinforcement device 2 is able to keep the deformation of the body small while keeping the vibration of the rod 11 small.

In addition, in the body reinforcement device 2 according the this embodiment, one ends of the rod 11 and hydraulic damper 12 are connected to each other rigidly through the first mounting bracket 13 while the other ends of the rod 11 and hydraulic damper 12 are connected to each other rigidly through the second mounting bracket 14. Therefore, in this body reinforcement device 2, vibration of the rod 11 can be transmitted directly to the hydraulic damper 12 through the first mounting bracket 13 and second mounting bracket 14. As a result, in this body reinforcement device 2, the vibration of the rod 11 can be damped even more reliably by the hydraulic damper 12.

Further, since ends of the rod 11 and hydraulic damper 12 are attached to one mounting bracket 13, 14, the ends of the rod 11 and hydraulic damper 12 can be mounted to the portion to be reinforced at a time. As a result, mounting work of the reinforcement device 2 can be performed easily. Since in this embodiment, one first mounting bracket 13 is used in common for the body reinforcement device 2 on the left side of the body and the body reinforcement device 2 on the right side of the body, the reinforcement device assembly 1 having two reinforcement devices 2 can be mounted to the body easily. Further, as a result of adopting the foregoing arrangement, higher strength can be achieved compared with when the body reinforcement device 2 on the left side of the body and the body reinforcement device 2 on the right side of the body are mounted separately at the foregoing positions.

### (Second Embodiment)

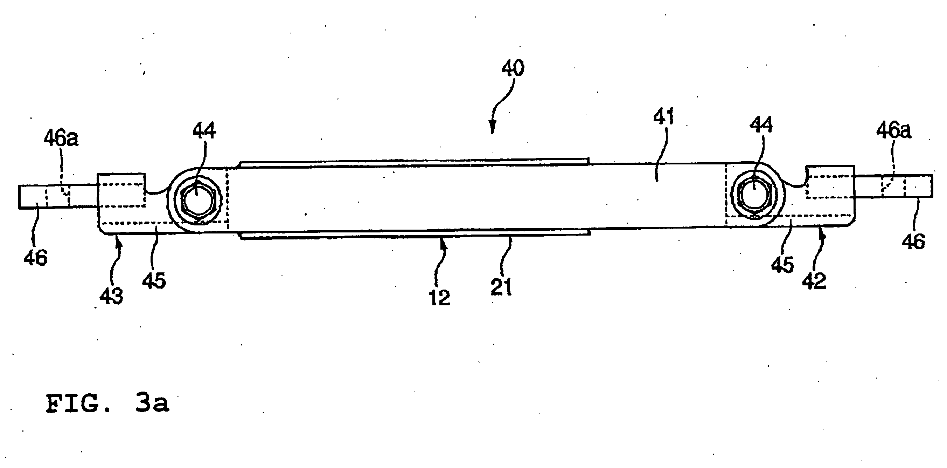

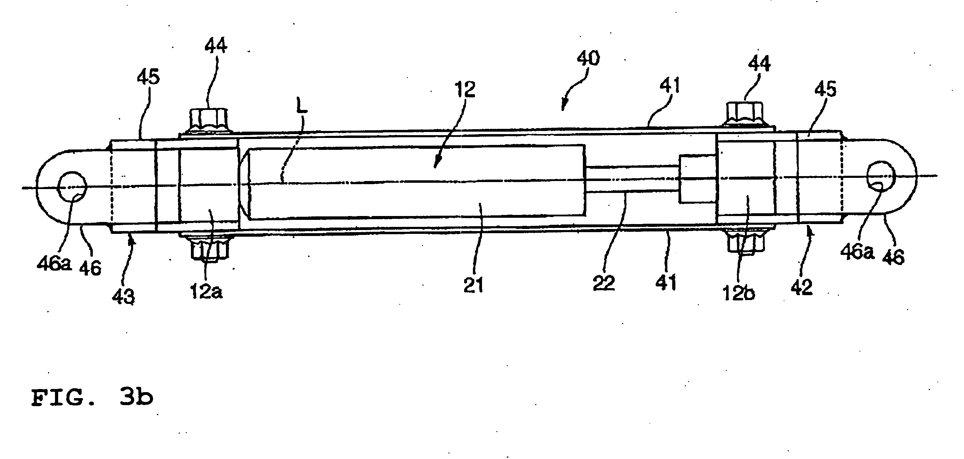

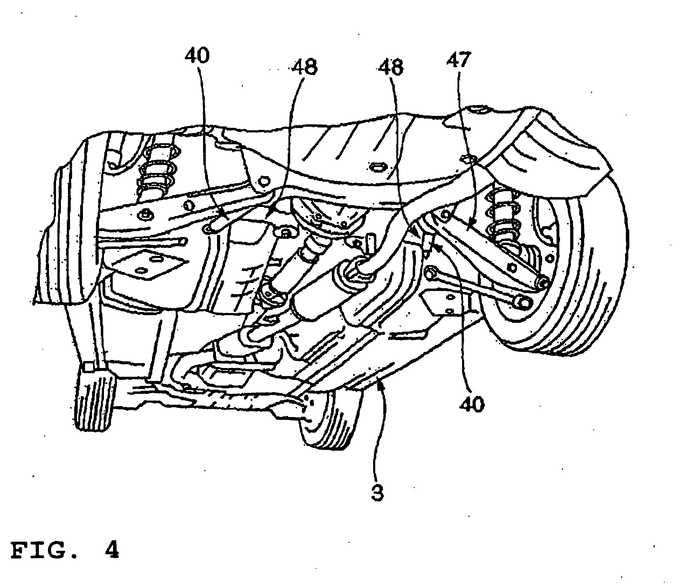

The body reinforcement device for a vehicle according to this invention can be formed as shown in FIG 3A, FIG. 3B and FIG. 4.
FIG. 3A is a side view showing another embodiment, and FIG. 3B is a plan view showing the other embodiment. FIG. 4 is a perspective view showing the reinforcement device being mounted to a body. In these figures, the same or similar parts as described in FIG. 1 and FIG. 2 are designated by like reference numerals and detailed description is not repeated.

A body reinforcement device 40 shown in FIG. 3A, FIG. 3B and FIG. 4 is constituted with one hydraulic damper 12, two bands 41, 41 located on both sides of the hydraulic damper 12 and first and second mounting brackets 42, 43 for connecting ends of these hydraulic damper 12 and band 41 to each other. The hydraulic damper 12 has the same structure as that used in the first embodiment. In this embodiment, the band 41 constitutes the reinforcement member referred to in this invention.

The band 41 is made from a steel plate formed in the shape of a narrow band and at both ends are fixed the first and second mounting brackets 42, 43 with fixing bolts 44. The bands 41 may be welded to the first and second mounting brackets 42, 43.
The first and second mounting brackets 42, 43 are each constituted by a bracket body 45 formed in the shape of a letter C in section and a mounting piece 46 having one end inserted in the inner side of the bracket body 45 and welded thereto. The mounting piece 46 has a bolt hole 46a drilled at the laterally central portion (in the direction in which the bands 41 are disposed side by side).

The bracket body 45, inside which a boss 12a, 12b is fitted and at both outer sides of which the bands 41 are overlapped, is fixed to the bands 41 and hydraulic damper 12 with a fixing bolt 44 passing through these parts.
Since the first and second mounting brackets 42, 43 are attached to the bands 41 and hydraulic damper 12 in this way, the body reinforcement device 40 is formed, with the bands 41 disposed parallel to each other on both sides of the hydraulic damper 12.

The body reinforcement device 40, as shown in FIG. 4, spans the space between two portions to be reinforced because of the mounting pieces 46, 46 at both ends being mounted on a mounting portion 48 in a rear wheel suspension device 47 of the automobile to be mounted to the chassis 3 and on the bottom surface 3 located near the mounting portion 48.

In the body reinforcement device 40 according to this embodiment, the hydraulic damper 12 can be located on the same axis as an imaginary line L (see FIG. 3(b)) connecting the two portions to be reinforced (mounting portion 48 and bottom surface of the chassis 3). Further, in this body reinforcement device 40, the two bands 41, 41 can be located at positions symmetrical with respect to the imaginary line L.

Therefore, since in the body reinforcement device 40 according to this embodiment, a load applied from the portion to be reinforced is distributed uniformly to the two bands 41, 41 and acts on the hydraulic damper 12 in its axial direction, no moment due to reaction force is produced when the load is applied, and the reaction force is allowed to act in the longitudinal direction (in the direction along the imaginary line L) for the firm reinforcement of the body.

### (Third Embodiment)

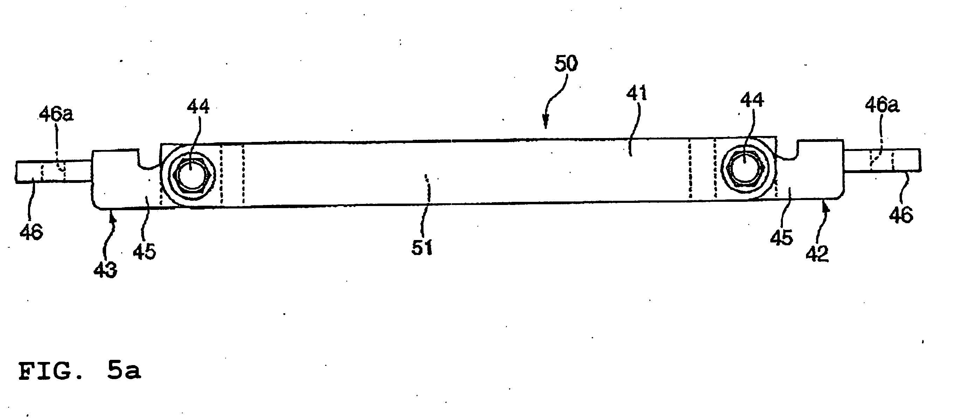

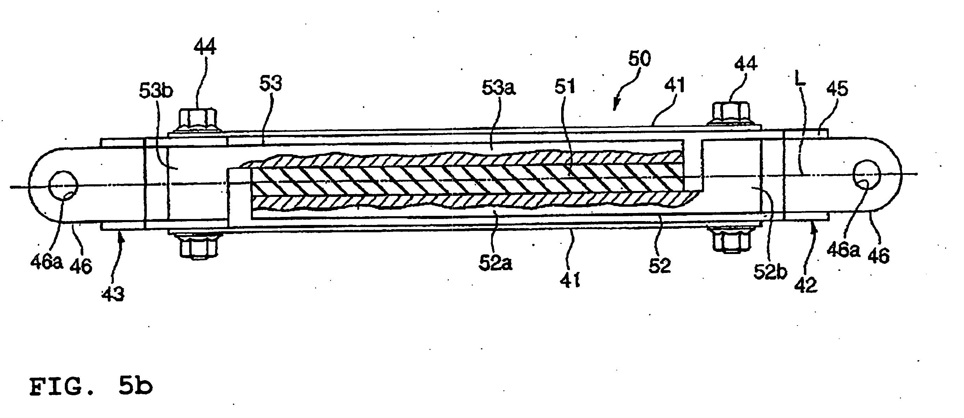

The body reinforcement device for a vehicle according to this invention can be formed as shown in FIG 5A and FIG. 5B. FIG. 5A is a side view showing another embodiment, FIG. 5B is a plan view showing the other embodiment, and FIG. 5B is depicted with a portion broken away. FIG. 4 is a perspective view showing the reinforcement device being mounted to a body. In these figures, the same or similar parts as described in FIG. 1 to FIG. 4 are designated by like reference numerals and detailed description is not repeated.

A body reinforcement device 50 shown in FIG. 5A and FIG. 5B is provided, as damping force generating means for generating viscous damping force, with a visco elastic member 51 made of rubber. The visco elastic member 51 is formed in the shape of a band extending parallel to a band plate 41 and is coupled to the band plate 41 while being held between a pair of supporting bars 52, 53.

The supporting bars 52, 53 are formed by a metallic material and is constituted by plate-like portions 52a, 53a extending in the longitudinal direction of the band plate 41 along the main surface of the visco elastic member 51, and bosses 52b, 53b fixed, together with the bond plates 41, to bracket bodies 45 with fixing bolts 44. One main surface of the visco elastic member 51 is fixed to the plate-like portion 52a of one supporting bar 52 and the other main surface of the visco elastic member 51 is fixed to the plate-like portion 53a of the other supporting bar 53.

The boss 52b of one supporting bar 52 of these supporting bars 52, 53 is attached to a first mounting bracket 42 at one end of the body reinforcement device 50 and the boss 53b of the other supporting bar 53 is attached to a second mounting bracket 43 at the other end of the body reinforcement device 50.
The plate-like portion 52a and the plate-like portion 53a, as shown in FIG. 5B, are located at positions offset to one side and to the other side with respect to the imaginary line L and symmetrical with respect to the imaginary line L, supporting the visco elastic member 51, with the imaginary line L passing its center.

In the body reinforcement device 50 arranged as described above, the band 41 substantially functions as a beam to reinforce the vehicle body, and when the band 41 vibrates in the longitudinal direction, the visco elastic member 51 is elastically deformed in the direction of its surface to thereby produce damping force. As a result, no chassis 3 reinforced by the body reinforcement device 50 vibrates because of the band 41 becoming a vibration generating source. Therefore, the body reinforcement device 50 is able to keep the deformation of the vehicle body small while keeping the vibration of the band 41 small.

Although in the foregoing first through third embodiments, examples are shown in which both ends of the rod 11 or the band 41 and both ends of the hydraulic damper 12, or the ends of the supporting bars 52, 53, are attached to the first or the second mounting brackets 13, 14, 42, 43, these mounting brackets may be attached only to one ends of the reinforcement devices 2, 40, 50. In adopting such an arrangement, at the other ends of the reinforcement devices 2, 40, both of the rod 11 or the band 41 and the hydraulic damper 12 are mounted directly to the portion to be reinforced of the body. In adopting such an arrangement, at the other end of the body reinforcement device 50, the band 41 and the member of the supporting bars 52, 53 on the side of the other end are mounted directly to the mounting portion of the vehicle body. Although mounting man-hours are increased, an arrangement may be adopted in which both ends of the rod 11 or the band 41, both ends of the hydraulic damper 12 and the ends of the supporting bars 52, 53 are mounted directly to the portion to be reinforced of the vehicle body separately, in which case as in the foregoing embodiment, the body can be reinforced while preventing generation of the vibration.

In addition, although in the second and the third embodiment, examples are shown in which bands 41 are disposed at the sides of the damping force generating means (hydraulic damper 12, visco elastic member 51), this invention is not limited to that, but damping force generating means may be disposed on both sides of one reinforcement member (rod 11 or band 41). Further, although in the second and the third embodiment, examples are shown in which the plate-like band 41 is used, a bar-like reinforcement member may be used as shown in the first embodiment. Furthermore, the reinforcement device according to this invention may be arranged such that the reinforcement devices 40, 50 shown in the second or the third embodiment are connected in series. In arranging these members in series, bars 11 are welded to the reinforcement device 40, 50 at both ends such that they are located on the same axial line, respectively.

Further, although the foregoing embodiments, examples are shown in which portions where the front wheel suspension device 4 or the rear wheel suspension device 47 is mounted to the chassis 3, is reinforced by the body reinforcement device 2, 40, 50 according to this invention, the reinforcement device according to this invention may be used for reinforcing the other part of the body. For example, the reinforcement device according to this invention may be provided in an automobile with an engine mounted at the front of the vehicle body such that it crosses an opening of the engine room in the upper part in the lateral direction. In adopting this arrangement, a reinforcement device may be used which is formed by the rods 11 being arranged in series at both ends of the reinforcement device 40, 50 shown in the second or the third embodiment and welded thereto, for example.

### [Industrial Applicability]

The body reinforcement device according to this invention can be used as a device for reinforcing bodies of the vehicles such as cars, trucks or buses.

## Claims

1. Body reinforcement device for a vehicle comprising:
a reinforcement member for rigidly connecting two portions to be reinforced of a vehicle body to each other,
**characterized by**
a damping force generating means for generating viscous damping force spanning, along the reinforcement member, the space between the portions to be reinforced.

2. Body reinforcement device according to claim 1, wherein the reinforcement member is a rod (11), a band (41), or a bar-like member for rigidly connecting two portions to be reinforced of a vehicle body to each other.

3. Body reinforcement device according to claim 1 or 2, wherein the damping force generating means is a hydraulic damper (12), or wherein the damping force generating means is a visco elastic member made of rubber.

4. Body reinforcement device according to one of the claims 1 to 3, wherein the damping force generating means is spanning, parallel to the reinforcement member the space between the portions to be reinforced.

5. Body reinforcement device according to claim 3 or 4, wherein the hydraulic damper (12) is provided with a free piston (23) dividing an interior of the cylinder (21) of the hydraulic damper into a high pressure gas chamber (27) and an oil chamber (28).

6. Body reinforcement device according to claim 5, wherein the hydraulic damper (12) is provided with a piston with a choke dividing the oil chamber (28) into a first oil chamber (29) located on a piston rod (22) side, and a second oil chamber (30) located on the free piston (23) side, wherein the viscous damping force is produced by working oil flowing through the choke.

7. Body reinforcement device according to one of the claims 3 to 6, wherein the hydraulic damper is provided with a compression coil spring (25) formed by a shape memory alloy or a bimetal approximately in whole.

8. Body reinforcement device according to one of the claims 1 to 7, wherein at least one of the ends of the reinforcement member and the damping force generating means are fixed to the portion to be reinforced through one mounting bracket.

9. Body reinforcement device according to claim 8, wherein the one ends of the reinforcement member and damping force generating means are connected to each other rigidly through the first mounting bracket, while the other ends thereof are connected to each other rigidly through a second mounting bracket.

10. Body reinforcement device according to one of the claims 1 to 9, wherein a plurality of members each being at least either one of the reinforcement member and the damping force generating means are formed and disposed side by side parallel to each other at the sides of the other member.

11. Reinforcement device assembly formed by using two body reinforcement devices according to one of the claims 1 to 10.

12. Reinforcement device assembly according to claim 11, formed by two body reinforcement devices being combined in the shape of a letter V in plan view comprising a laterally central portion and left and right extending body reinforcement devices.

## Patentansprüche

1. Karosserieverstärkungsvorrichtung für ein Fahrzeug, aufweisend:
ein Verstärkungsteil zum steifen Verbinden zweier Abschnitte einer Fahrzeugkarosserie, die verstärkt werden sollen, miteinander,
**gekennzeichnet durch**
eine Dämpfungskraft- Erzeugungseinrichtung zum Erzeugen einer viskosen Dämpfungskraft, die entlang des Verstärkungsteils den Raum zwischen den Abschnitten, die verstärkt werden sollen, überspannt.

2. Karosserieverstärkungsvorrichtung nach Anspruch 1, wobei das Verstärkungsteil ein Stab (11), ein Band (41) oder ein stangenförmiges Teil ist, um zwei zu verstärkende Abschnitte einer Fahrzeugkarosserie miteinander steif zu verbinden.

3. Karosserieverstärkungsvorrichtung nach Anspruch 1 oder 2, wobei die Dämpfungskraft- Erzeugungseinrichtung ein hydraulischer Dämpfer (12) ist, oder wobei die Dämpfungskraft- Erzeugungseinrichtung ein visko- elastisches Teil, hergestellt aus Gummi, ist.

4. Karosserieverstärkungsvorrichtung nach einem der Ansprüche 1 bis 3, wobei die Dämpfungskraft- Erzeugungseinrichtung parallel zu dem Verstärkungsteil den Raum zwischen den Abschnitten, die verstärkt werden sollen, überspannt.

5. Karosserieverstärkungsvorrichtung nach Anspruch 3 oder 4, wobei der hydraulische Dämpfer (12) mit einem freien Kolben (23) versehen ist, der das Innere des Zylinders (21) des hydraulischen Dämpfers in eine Hochdruckgaskammer (27) und eine Ölkammer (28) teilt.

6. Karosserieverstärkungsvorrichtung nach Anspruch 5, wobei der hydraulische Dämpfer (12) mit einem Kolben mit einem Choke versehen ist, der die Ölkammer (28) in eine erste Ölkammer (29), angeordnet auf einer Seite der Kolbenstange (22), und eine zweite Ölkammer (30), angeordnet auf der Seite des freien Kolbens (23), teilt, wobei die viskose Dämpfungskraft durch Arbeitsöl, das durch den Choke fließt, erzeugt wird.

7. Karosserieverstärkungsvorrichtung nach einem der Ansprüche 3 bis 6, wobei der hydraulische Dämpfer mit einer Schraubendruckfeder (25), gebildet ungefähr vollständig durch eine Formgedächtnislegierung oder ein Bimetall, versehen ist.

8. Karosserieverstärkungsvorrichtung nach einem der Ansprüche 1 bis 7, wobei zumindest eines der Enden des Verstärkungsteils oder der Dämpfungskraft- Erzeugungseinrichtung an dem zu verstärkenden Abschnitt durch einen Montagehalter befestigt ist.

9. Karosserieverstärkungsvorrichtung nach Anspruch 8, wobei die einen Enden des Verstärkungsteils und der Dämpfungskraft- Erzeugungseinrichtung miteinander durch den ersten Montagehalter steif verbunden sind, während die anderen Enden derselben miteinander durch einen zweiten Montagehalter steif verbunden sind.

10. Karosserieverstärkungsvorrichtung nach einem der Ansprüche 1 bis 9, wobei eine Mehrzahl von Teilen, die jeweils entweder eines von dem Verstärkungsteil oder der Dämpfungskraft- Erzeugungseinrichtung sind, nebeneinander parallel zueinander auf den Seiten des anderen Teiles gebildet und angeordnet sind.

11. Verstärkungsvorrichtungsanordnung, gebildet durch Verwendung zweier Karosserieverstärkungsvorrichtungen nach einem der Ansprüche 1 bis 10.

12. Verstärkungsvorrichtungsanordnung nach Anspruch 11, gebildet durch zwei Karosserieverstärkungsvorrichtungen, die in der Form eines Buchstabens V in der Draufsicht kombiniert sind, die einen seitlich zentralen Abschnitt und sich links und rechts erstreckende Karosserieverstärkungsvorrichtungen aufweisen.

## Revendications

1. Dispositif de renforcement de carrosserie pour un véhicule comprenant :
un élément de renforcement pour raccorder rigidement deux parties à renforcer d'une carrosserie de véhicule entre elles,
**caractérisé par** :
des moyens de génération de force d'amortissement pour générer une force d'amortissement visqueuse recouvrant, le long de l'élément de renforcement, l'espace entre les parties à renforcer.

2. Dispositif de renforcement de carrosserie selon la revendication 1, dans lequel l'élément de renforcement est une tige (11), une bande (41) ou un élément en forme de barre pour raccorder rigidement deux parties à renforcer d'une carrosserie de véhicule entre elles.

3. Dispositif de renforcement de carrosserie selon la revendication 1 ou 2, dans lequel les moyens de génération de force d'amortissement sont un amortisseur hydraulique (12) ou dans lequel les moyens de génération de force d'amortissement sont un élément viscoélastique en caoutchouc.

4. Dispositif de renforcement de carrosserie selon l'une quelconque des revendications 1 à 3, dans lequel les moyens de génération de force d'amortissement recouvrent, parallèlement à l'élément de renforcement, l'espace entre les parties à renforcer.

5. Dispositif de renforcement de carrosserie selon la revendication 3 ou 4, dans lequel l'amortisseur hydraulique (12) est prévu avec un piston libre (23) divisant un intérieur du cylindre (21) de l'amortisseur hydraulique en une chambre de gaz à haute pression (27) et en une chambre à huile (28).

6. Dispositif de renforcement de carrosserie selon la revendication 5, dans lequel l'amortisseur hydraulique (12) est prévu avec un piston doté d'un étranglement divisant la chambre à huile (28) en une première chambre à huile (29) située sur un côté de la tige de piston (22) et en une seconde chambre à huile (30) située sur le côté de piston libre (23), dans lequel la force d'amortissement visqueuse est produite par l'huile de travail qui s'écoule à travers l'étranglement.

7. Dispositif de renforcement de carrosserie selon l'une quelconque des revendications 3 à 6, dans lequel l'amortisseur hydraulique est prévu avec un ressort hélicoïdal de compression (25) formé par un alliage à mémoire de forme ou par un bimétal approximativement dans son ensemble.

8. Dispositif de renforcement de carrosserie selon l'une quelconque des revendications 1 à 7, dans lequel au moins l'une des extrémités de l'élément de renforcement et des moyens de génération de force d'amortissement sont fixés sur la partie à renforcer par l'intermédiaire d'un support de montage.

9. Dispositif de renforcement de carrosserie selon la revendication 8, dans lequel lesdites une extrémités de l'élément de renforcement et des moyens de génération de force d'amortissement sont raccordées entre elles de manière rigide par l'intermédiaire du premier support de montage, alors que leurs autres extrémités sont raccordées entre elles de manière rigide par l'intermédiaire d'un second support de montage.

10. Dispositif de renforcement de carrosserie selon l'une quelconque des revendications 1 à 9, dans lequel plusieurs éléments, chacun étant au moins l'un parmi l'élément de renforcement et les moyens de génération de force d'amortissement, sont formés et disposés côté à côté parallèles entre eux au niveau des côtés de l'autre élément.

11. Ensemble de dispositifs de renforcement formé en utilisant deux dispositifs de renforcement de carrosserie selon l'une quelconque des revendications 1 à 10.

12. Ensemble de dispositifs de renforcement selon la revendication 11, formé par deux dispositifs de renforcement de carrosserie qui sont combinés sous la forme de la lettre V en vue en plan, comprenant une partie latéralement centrale et des dispositifs de renforcement de carrosserie s'étendant à gauche et à droite.
